# EUROPEAN PATENT SPECIFICATION

(11) **EP 3 417 730 B1**
(45) Date of publication and mention of the grant of the patent: **22.04.2020**
(21) Application number: 18179292.0
(22) Date of filing: 22.06.2018
(51) Int. Cl.: A41D 13/018, A41D 13/05, B32B 5/26, D04B 1/22, A63B 71/12, B32B 1/08, B32B 5/02, B32B 5/14, B32B 5/22, B32B 7/12, D04B 1/24, B32B 3/08, B32B 5/08, A41D 31/00, A63B 71/08, B60R 21/2338, B62J 27/00

(54) **PROTECTION DEVICE AND METHOD FOR PERFORMING AN IMPACT TEST ON SUCH A PROTECTION DEVICE**
SCHUTZVORRICHTUNG UND VERFAHREN ZUM DURCHFÜHREN EINES SCHLAG-TESTS AN EINER SOLCHEN SCHUTZVORRICHTUNG
DISPOSITIF DE PROTECTION ET PROCÉDÉ POUR EFFECTUER UN ESSAI D'IMPACT SUR UN TEL DISPOSITIF DE PROTECTION

(30) Priority: 23.06.2017 IT 201700070699
(43) Date of publication of application: 26.12.2018
(73) Proprietor: Dainese S.p.A., 36064 Colceresa (Vicenza) (IT)
(72) Inventor: ZANOTTO, Stefano, 36060 Molvena (Vicenza) (IT)
(74) Representative: Manfrin, Marta

(56) References cited:
- WO-A1-2009/143000
- WO-A1-2010/067288
- WO-A1-2014/181235
- WO-A1-2017/065939
- US-A- 5 083 361
- US-A- 5 552 205

## Description

The present invention relates to a protective device for a protection of a user, preferably a wearable protective device. The present invention also relates to a garment including the protective device. The protective device includes an inflatable element suitable for protecting the user's body, such as a passenger, a motor-vehicle driver, a skier, a horseman, or a similar user, against impacts and/or falls, or to prevent the consequences of an impact or fall, during a sporting and/or work activity.

A protective device is, for example, described in the international patent application WO2010067288 disclosing the preamble of claim 1. The inflatable element is a bivalve casing formed by two opposite walls or sheets, a structure including a first mesh and a second mesh and tie elements fasten to the meshes. The tie elements preferably connect opposing portions of the inflatable element. Each mesh is adheringly associated with the respective wall. The tie elements are threads and have opposite ends firmly fasten to the mesh of the respective wall. The fastening at the opposite ends of the tie elements is, for example, obtained by interweaving tie elements between the threads of the mesh. The length of the tie elements is adjusted so that the tie elements have a condition of maximum tension and/or maximum extension when the inflatable element is inflated. In practice, the shape and size of the inflatable element can be controlled and established a priori, since the maximum expansion of the inflatable element can be controlled by checking the length and the maximum tension of the tie elements.

More particularly, the present invention stems from an observation by the inventors of the present invention regarding the way an impact test or certification test is carried out, for example the one according to the European standard EN 1621.4. This observation should also be considered as part of the invention.

The impact test is carried out by means of a device that includes a striking body or hammer which is dropped onto an anvil onto which a portion of the inflatable element in an inflated condition has previously been placed. For example, if the shoulder covering portion is concerned, a central region of the portion of the inflatable element is positioned onto an anvil and exposed to the striking body. The anvil has a load cell inside of it. In use, the portion of the inflatable element is moved along a trajectory, thus allowing the striking body to impact on the whole portion of the inflatable element intended for protection. The residual energy after the impact is measured by the load cell and this value, appropriately averaged and filtered, represents the force that the user's body would receive.

In other words, the portion of the inflatable element undergoing the test is intended as an operative protective region, i.e. the region of the inflatable element lain on the anvil and exposed to impact by the striking body, and, that must comply with the test. The impact zone of the bag is defined a priori according to the industry standard. For example, as said, the shoulder area is a substantially central area of the shoulder. Similarly, the chest area, is an area that extends centrally, with respect to the portion of the chest intended to protect. In practice, this operating protective region is that "working" region that "operates" for protection. The remaining portion of the inflatable element, and in particular a free edge zone of the inflatable element which for example partially surrounds the protective operating region, or in general is adjacent to the operating portion, does not act as a protection.

It follows that, by lying the inflatable element onto the anvil as if it were placed against a certain portion of a user's body, the protective operating region is an inflatable element region that substantially coincides with a portion of the inflatable element that must guarantee the protection on said determined portion of a user's body. The shoulder protection operative region is a region of the inflatable element that, when worn by the user, is centred on the respective shoulder, and the edge region is the edge region where the inflatable element ends, around the shoulder. Similar operative regions can be identified for the chest, back, hips or other parts of the body. It follows that in the context of the present disclosure, the protective operating region is a region of the inflatable element that substantially coincides with an area of the portion of the inflatable element that must guarantee protection on a corresponding part of the body.

However, since the operative protective region is larger than the anvil, in order to test the entire operative protective region, during the test this region is moved. In other words, since in the impact test it is necessary evaluating the whole operative protective region undergoing the impact test in its entirety, the operative region is made to move under the hammer, between the hammer and the anvil. To cover the entire area, the hammer can partially go outside of the operative region, until including or striking over the free edge of the inflatable element.

During the movement, there is the risk that part of the edge of the inflatable element, i.e. extremity part of the bag, is positioned between the hammer and the anvil.

The authors of the present disclosure observed that the free edge zones, due to the fact that they are end portions of the bag, are inevitably zones having - due to the geometry of the inflatable element - lower overall height. In these zones, therefore, lower local pressure can be reached, and therefore a lower energy absorption capacity. In other words, in the free edge zone, greater is the risk for the hammer "to go to a close-wound condition", completely squashing the inflatable element, against the anvil with total transmission of energy, or that in some way the element inflatable, being unable to resist, is bent between anvil and striking body. With the expression " to go to a close-wound condition ", typically used in the sector of shock absorbers, it is meant the situation in which a shock absorber is maximally compressed with all the excursion at its disposal. In other words, the free edge zones located close to the operative protective region exposed to the striking body tend "to go to a close-wound condition ", that means, two walls or opposite portions of the inflatable element tend to come into contact with each other, determining a maximum energy transmission and substantially a null energy absorption.

Energy absorption in these free edge zones negatively affects the overall assessment and evaluation of the inflatable element energy absorption and therefore an assessment of the protection capacity of the same is also affected.

Therefore there is a problem of energy absorption in the inflatable element edge zone which, although not formally intended to be a zone formally designed to protection, undergoes the impact testing.

In order to lessen this problem and pass the test, until now the inflatable element dimensions, understood as the inflatable element surface extension or area exposed to the hammer, have been increased overall, so as to reduce the risk of involving the free edge between the anvil and the hammer. However, this dimensional increase leads to an increase of the inflatable element volume. The increase of the inflatable element volume requires the use of gas generators with higher load capacities, as well as, consequently, longer inflation times.

A technical problem underlying the present invention lies in providing a protective device that can pass a test, and other conditions being equal, having a smaller air volume than prior art protective device and/or presenting further advantages. In other words, it is provided a protective device that can allow a high energy absorption, without an excessive increase in the inflatable element volume in an inflated condition.

This problem is solved by a protective device for the personal protection of a user and a method for performing an impact test according to the respective independent claims. Secondary features of the object of the present invention are defined in the corresponding dependent claims.

According to the expedient of the present invention, it is not necessary to increase the surface of the whole inflatable element exposed to the hammer, but it is sufficient increasing the thickness or height of the inflatable element in a localized way.

In particular, it is proposed to increase the height of the inflatable element close to the free edge, in a zone (boundary zone or peripheral zone) comprised between the operative protective region and the free edge of the inflatable element. In practice, it is sufficient to create a height difference between the operative protective region and a zone (boundary zone or peripheral zone) between the operative protective region and the free edge of the inflatable element. In other words, a central area of the operative protective region may have a lower height of a zone (boundary zone or peripheral zone) surrounding the protective operating region. Going from the middle of the operative protective region of the inflatable element towards the perimeter or free edge of the inflatable element, an increase in the height of the inflatable element can be provided.

By protective operating region it is intended, as said, in the context of the present invention, the zone which must pass the impact test when hit by the hammer or striking body, and such as to efficiently protect a portion of the body. Therefore, it is to be understood that the inflatable element region which is not above the anvil and/or is not affected by the striking body is not an operative protective region, as it is not tested. It should be noted that the boundary zone or peripheral zone can be designed to protection as much as the operative protective region and therefore to the protection certification.

The free edge is a region of the bag which is located at the free edge of the bag, along the perimeter such that, when the hammer strikes against the inflatable element, it tends to be more easily crushed, or curved, and bents downwards following the profile of the anvil.

It follows that, thanks to the fact that in the aforesaid boundary region, the bag is higher, a contrast action with respect to such possible crushing or bending, and therefore a greater absorption of energy is obtained.

The boundary zone can be understood as an area occupying a whole perimeter of the operative protective region of the inflatable element, or only a part, at least 50%, depending on the shape of the inflatable element and on the movements during the impact tests. In other words, the whole boundary zone of the protection element may have a greater height than the protective operating region. Alternatively in an embodiment, only a portion of the boundary zone is higher, for example between 50% and 80% with respect to the central zone.

In an embodiment, the inflatable element is made according to the technologies described in the international patent application WO2010/067288, in the international patent application WO2016/178143, and in the European patent application EP3167730A1 in the name of the same holder of the present patent application. The invention subject of the present patent application is particularly useful for the inflatable elements of said patent applications since in these applications are described inflatable elements of reduced thickness, and of thickness that is reduced even more along the edge, where the external walls are connected and perimetrically close the meshes causing a collapse of the tie threads, or even more where there is a reduction in the tie threads length in the inflatable element edge zone.

All these applications describe inflatable elements provided with tie elements capable of controlling the thickness of the inflatable element.

In the context of the present invention, a method is also provided for carrying out an impact test by means of a striking element or hammer on an inflatable element, of the type just described, included in a wearable protective device for personal protection.
The method provides for:
- providing an inflatable element in which an inner chamber is defined, the inflatable element including a plurality of tie elements distributed in the inner chamber and connected to surface portions of said inflatable element, wherein said inflatable element is apt to assume an active inflated condition and a rest deflated condition,
- wherein the inflatable member includes a protective operating region and a boundary zone or peripheral zone of the inflatable element, said boundary zone being interposed between at least 50% of the operative protective region and a free edge of the inflatable element wherein, in said inflated condition, the height or thickness of the boundary zone is greater than the one of the protective operating zone;
- inflating the inflatable element;
- positioning the inflatable element onto an anvil so that a surface portion of the inflatable element is resting on the anvil;
- hitting the other surface portion of the inflatable element with a striking body on the operative protective region of the inflatable element as much as on the boundary zone.
Further advantages, characteristics and methods of use of the object of the present invention will be apparent from the following detailed description of some of its preferred embodiments, given by way of example and not for limiting purposes. It is however evident how each embodiment can have one or more of the above-listed advantages; however it is not required in any case that each embodiment simultaneously present all the advantages listed.

Reference will be made to the figures of the attached drawings, wherein:

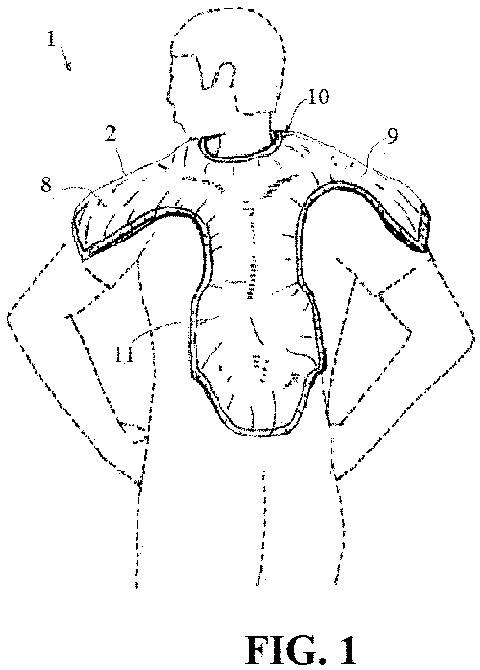

- Figure 1 shows a rear view of a protective device according to an embodiment of the present invention;
- Figure 2 shows a plan view of the protective device of Figure 1;
- Figure 3a shows a section of the device of Figure 2 according to the line III of Figure 2 according to a first embodiment;
- Figure 3b shows a section of the device of Figure 2 according to the line III of Figure 2 according to a second embodiment.

With reference to the attached figures, the reference number 1 indicates a personal protective device according to the present invention according to a first embodiment. In particular, the protective device comprises an inflatable element 2 shaped like a casing and wherein an inner chamber 3 is defined. The inflatable element 2 is apt to substantially assume a first rest condition or deflated condition, and a second active condition or inflated condition. The inflating modes of the inflatable element 2 will be described in the following description.

In the illustrated embodiment, the inflatable element 2 is suitably shaped to be placed on the upper part of a user's bust. For this purpose, the shape of the inflatable element 2 has two side wings 8, 9 for covering a user's shoulders, a central portion substantially "C"-shaped 10 and a spinal portion 11, intended to protect the user's backbone. A gas generator not visible in the drawings is included in the spinal portion 11 of the inflatable member.

The inflatable element 12 can be made according to the technology described in the patent application PCT/IB2009/055512 and in the patent application PCT/ IT2009/000547, or in the European patent application EP3167730A1.

The protective device 1 comprises a plurality of tie elements 5 distributed in the inner chamber 3 and permanently connected to respective portions of the inflatable element 2. The term tie element 5 refers to an element or entity, being tensioned, intended for keeping together or fasten or firm two or more parts of the inflatable element 2, at least when the latter is in an inflated condition.

In the example, the tie elements 5 are thread-like, and are flexible and inextensible elements. Therefore, they are appropriately sized so that, when the inflatable element 2 is in the rest condition, they are preferably not tensioned and are collapsed in the inner chamber 3, whereas when the inflatable element 2 is in an inflated condition they are tensioned. Alternatively, the tie elements 5 may be elastic or yielding threads, i.e. threads that, if subjected to a tensioning action, as during the inflated condition, extend or elongate until a maximum length is reached.

The inflatable element comprises opposite walls 15, 16 perimetrically joined along the edges 20, 21. More particularly, the inflatable element 2 comprises meshes 18, 19, each of which internally lining a respective one wall 15, 16, that is to say, on the inner side 3. Even more particularly, to give structural stability to the inflatable element, each mesh 18, 19 is firmly fixed to the surface of respective wall 15, 16, preferably by means of a glue film or glue layer as described as follow. It follows that the inflatable element 2 has a substantially double-valve structure, wherein each valve corresponds to a wall 15, 16. A textile structure made by two meshes 18, 19 is arranged inside the area between the two walls 15, 16 and each mesh is, preferably, fixed to the respective wall 15, 16.

According to an aspect of the present invention, the inflatable element 2 includes one or more operative protective region 30. The operative protective region 30 is the region that, in an inflated condition during an impact test, in a certification device, is centered on an anvil and is exposed to a striking body. The inflatable element also has a peripheral zone or boundary zone 32 being along at least a part of protective operating region perimeter, between the latter and the free edge 20, 21 of the inflatable element.

The peripheral zone or boundary zone 32 has a greater height than the protective operating region 30 when the inflatable element 2 is in the active inflated condition.

It is possible that only a portion of the operative zone 30 is surrounded by the boundary or peripheral zone 32. In other words, the boundary zone or peripheral zone 32 contours at least partly the protective operating region 30. For example, the boundary or peripheral 32 surrounds or encircles at least 50%, preferably from 50% to 80% of the central zone or protective operating zone 30.

The different height can be obtained by using textile structures with inextensible threads of different lengths as described in the patent application PCT/IB2009/055512 and in the aforementioned PCT/IT2009/000547 patent application. In particular, in said boundary zone or peripheral zone 32 the threads or tie elements 5 may be longer than the threads of the operative zone 30.

The knitting machine can also be set for varying the type of joining threads 5 according to the portion of the protective device 1 where they are located. Thus, threads 5 of different materials, preferably made of elastic or yielding materials, and being or not of the same length, can be used at the peripheral or boundary zone 32 and/or at the operative zone 30. For example, threads or tie elements 5 having the same length can be made of elastic or yielding material at the boundary or peripheral zone 32 while the threads or tie elements 5 at the operative area 30 are made of inextensible material. Or, threads 5 made of a more elastic or more yielding material, i.e. with a greater tendency to deformation and then elongation, can be used for the boundary or peripheral zone 32 and less elastic or yielding threads 5 for the protective operating zone 30. In both cases, when the inflatable element 2 assumes the active inflated position, threads 5 of the boundary or peripheral zone 32 will have to be longer than the threads 5 used in the operative zone 30.

However, as anticipated, the boundary zone or peripheral zone 32 thus has a height or thickness greater than the height or thickness of the protective operating region 30 when the inflatable element 2 is inflated.

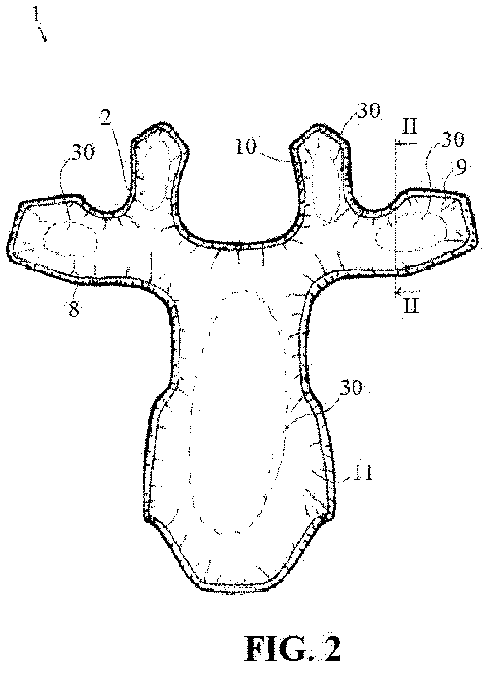

With reference to Figure 2B, a personal protective device 100, made according to a construction technique different from that of the previous embodiment, is described below.

Elements and parts of this second embodiment having the same function and the same structure of the elements and parts of the previously described embodiment are indicated with the same reference number and are not described in detail once again.

In the embodiment of Figure 2B, the inflatable element 102 includes a knitted body 103, having the same function as the two meshes 18, 19 of the previous embodiment. In the illustrated embodiment, the knitted body 103 is a substantially pouch body, such as that described in the international application PCT/IB2016/052510.

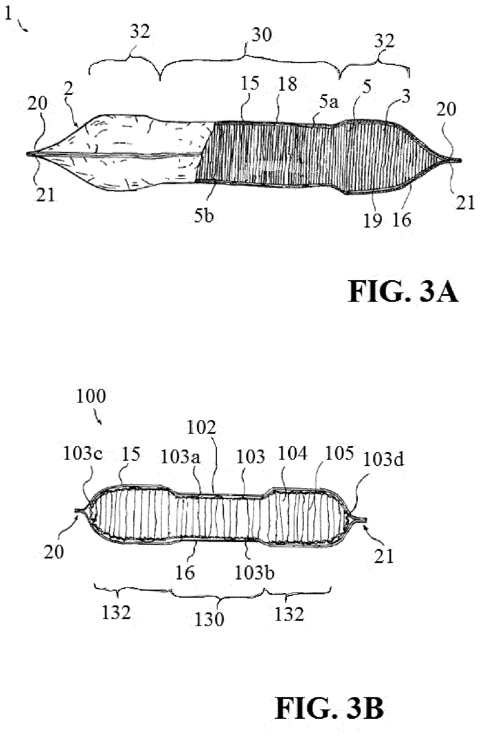

The knitted body 103 therefore includes, when lain on a plane and flattened in this extended position, two opposed portions or walls 103a, 103b and at least three lateral portions 103c, 103d, only two of which are visible in Figure 3b, extending seamlessly between the two opposing portions 103a, 103b.

Thanks to the tubular shape, and even better thanks to the bag-shaped or closed-casing shape, the knitted body 103 has the advantage of being closed laterally on at least two sides (at the side portions 103c, 103d), near the inflatable element 102 free edges 20, 21.

The inflatable element 102 is also shaped with two side wings 8, 9 for covering a user's shoulders, a central portion substantially "C"-shaped 10 and a spinal portion 11, intended to protect the user's backbone. The knitted body 103 is shaped to follow the shape of the inflatable element 102, and is made in a single-body according to said shape so as to define a single inner area 104.

The knitted body 103 further includes a plurality of joining threads 105 or tie threads distributed in the inner chamber 104 and firmly connected to the respective portions 103a, 103b of the knitted body 103, in particular to surface portions thereof. The knitted body 103 with the joining threads 105 corresponds, by function, to the textile structure above described. The joining threads 105 have the same function as the tie elements above mentioned.

The knitted body 103 can also be coated and covered with a covering. The cover may include two walls 15, 16 or sheets, made of a sheet of soft material as described in the aforementioned international applications, being opposite each other, and fasten perimetrically along respective perimetric edges 20, 21.

The walls 15, 16 may be like those described in the previous embodiment.

According to an aspect of the present invention, the inflatable member 102 includes a protective operating region 130. The protective operating region 130 is that region which, during an impact test in a certification device, is centred on an anvil in inflated condition and exposed to a striking body. The protective operating region 130 is moved with respect to the anvil to be completely hit by the striking body.

The inflatable member 102 further includes a peripheral zone or boundary zone 132 which at least partially surrounds the protective operating region 130 and is interposed between the protective operating region 130 and the inflatable member edge 20, 21.

The peripheral or boundary zone 132 may be a zone that completely surrounds the central area 130, or which extends for some portions of the protective operating region 130, where the latter is close to the inflatable element edge 20, 21. Also in this embodiment, as for the previous one, the peripheral zone or boundary zone 132 has a greater height than the protective operating region 130 when the inflatable element 102 assumes the active inflated condition.

As for the previous embodiment, it is possible that the boundary zone or peripheral zone 132 only partially surrounds the protective operating region 130. For example at least 50%, even more preferably between 50% and 80%, of the central zone or protective zone 130 is surrounded or encircled by the boundary zone or peripheral zone 132.

A method for making a knitted body such as the one above described provides, for example, using a so-called three-dimensional knitting machine known to a person skilled in the art. The fact of using a knitting machine to make a knitted body with the joining threads allows the length of the threads with which the knitted body is made to be calibrated as required. In particular, the knitting machine can be set for varying the length and density of the joining threads according to the portion of the protective device where they are located. It follows that the aforementioned protective operating region 130 and peripheral or boundary zone 132 can be made with joining threads 105 of different length. In particular, in said boundary zone or peripheral zone 132 the threads or tie elements 105 may be longer than the threads of the operating area 130.

The knitting machine can also be set for varying the type of joining threads 105 according to the portion of the protective device 100 where they are located. Therefore, threads 105 of different materials, preferably made of elastic or yielding materials, and having or not the same length, can be used at the peripheral or boundary zone 132 and/or at the operative zone 130. For example, threads or tie elements 105 having the same length can be made of elastic or yielding material at the boundary or peripheral zone 132 while the threads or tie elements 105 at the operative area 130 are made of inextensible material. Or, more elastic or more yielding threads 105, i.e. with a greater tendency to deformation then to elongation, can be used for the boundary or peripheral zone 132 and less elastic or less yielding threads 105 for the protective operating zone 130. In both cases, when the inflatable element 102 assumes the active inflated position, the threads 105 of the boundary or peripheral zone 132 will have to be longer than the threads 105 used in the operative zone 130.

However, as anticipated, the boundary zone or peripheral zone 132 thus has a height or thickness greater than the height or thickness of the protective operating region 130 when the inflatable element 102 is inflated. It can be understood that by moving the protective operating region 30, 130 of both embodiments between the anvil and the hammer, thanks to the presence of the higher border region 32, 132, a crush of the edge can be excellently contrasted, and then pass an impact test without excessively increasing the overall volume of the entire inflatable element.

In order to carry out the inflation of the inflatable element 2, 102 of both embodiments, in the event of a fall and/or slip and/or an unexpected impact on the part of a user or of a vehicle on which he/she proceeds, the protective device 1, 100 according to the present invention is apt to cooperate with suitable activation means operatively connected to inflation means, of which it is illustrated in the figures just for illustrative purposes a compressed cold gas can 12 included within the inflatable element 2, 102 or connected by means of a conduct or cannula to an intercept valve which allows the introduction of an inflating fluid into the inflatable element.

Alternatively, such inflation means may comprise pyrotechnic or hybrid type gas generators or other types known to the state of the art.

These inflation means are controlled by a control unit based on the detection of the state of the vehicle/pilot system; for example said control unit can implement a fall prediction system that allows a timely identification of the fall event and a reliable prediction of this by means of accelerometric sensors integral with the vehicle (or the pilot) and a processing unit of the signals produced by the sensors themselves.

Alternatively, the device according to the present invention can also be applied using an activation cable connected to a vehicle driven by a user, which cable controls the inflation of the inflatable element 2, 102 following removal of the user from the vehicle, such as, after a fall or an unexpected impact.

In any case, the aforesaid activation and inflation means can be integrated into the protective device 1, 100 according to the present invention or placed externally thereof.

It should also be noted that the activation modes, although being of particular relevance for an effective operation of the device, will not be further described in greater detail since being modes essentially already known to an expert in the field of protection of an individual from unexpected impacts.

The protective device 1, 100 can also comprise a deflation valve (not shown in the figures), communicating on one side with the inner chamber and on the other side with the external environment, in order to allow the inflating element 2, 102 to be deflated after the activation, and when a protective action is no longer required.

It is further noted that the protective device 1, 100 may be included in a garment, or may be an integral part of a garment. In fact, thanks to the setting potentiality of a rectilinear knitting machine, the creation of a knitted body together with a piece of clothing in a single production phase is no how prevented, that is to say that the knitted body is integrated as single body into the piece of clothing, or even that the knitted body coincides with the piece of clothing. In fact, for example, the knitted body can be in form of a vest or jacket and, for example, made with a knit density such as to allow an adequate fluid seal of the inflation gas.

In order to make the knitted body waterproof or at least temporarily waterproof, it is possible to provide a localized covering of the knitted body, or the creation of a thicker mesh at the knitted body.

Two covering layers may be provided on opposite sides of the knitted body, and said covering layers may be joined through appropriate openings provided around the knitted body.

The object of the present invention has been described up to now with reference to preferred embodiments. It is to be understood that other embodiments may exist which belong to the same inventive core, all of which are within the scope of the protection of the appended claims hereafter.

## Claims

1. Wearable protective device (1, 100) for the personal protection of a user, said protective device comprising an inflatable element (2, 102) in which an inner chamber (3, 104) is defined, the inflatable element including a plurality of tie elements (5, 105) distributed in the inner chamber (3, 104) and having opposite ends connected with or joined to surface portions of the inflatable element, wherein said inflatable element (2, 102) is suitable for assuming an active inflated condition and a deflated rest condition; said protective device comprising a protective operating region (30, 130) for protecting a corresponding portion of a user's body wherein said inflatable element comprises a boundary or peripheral zone (32, 132) interposed between at least a portion of the protective operating region (30, 130) and an adjacent free edge zone (20, 21) of the inflatable element (2, 102);
and wherein said boundary or peripheral zone (32, 132), when the inflatable element is in said active inflated condition, has a height or thickness higher than the height or thickness of the protective operating region (30, 130);
and **characterised in that** said boundary or peripheral zone (32, 132) surrounds at least 50% of the protective operating region (30, 130).

2. Wearable protective device (1, 100) according to claim 1, wherein a protective operating region (30, 130) is an area intended for establishing certification of protection.

3. Wearable protective device (1, 100) according to claim 1 or 2, wherein said adjacent free edge zone (20, 21) of the inflatable element (2, 102) is an area not intended for establishing certification of protection.

4. Wearable protective device (1, 100) according to any one of the preceding claims, wherein the length of the tie elements (5, 105) is correlated to the boundary or peripheral zone (32, 132) height or to the protective operating region (30, 130) height.

5. Wearable protective device (1, 100) according to claim 4, wherein the tie elements (5, 105) in the boundary zone or peripheral zone (32, 132) have greater length than the tie elements (5, 105) of the protective operating area (30, 130).

6. Wearable protective device (1, 100) according to any one of the preceding claims, wherein the boundary or peripheral zone (32, 132) surrounds at least from 50% to 80% of the protective operating region (30).

7. Wearable protective device (1, 100) according to any one of the preceding claims, wherein the boundary or peripheral zone (32, 132) completely surrounds the protective operating region (30).

8. Wearable protective device (1, 100) according to any one of the preceding claims, wherein the protective operating region (30) is a portion of an inflatable element intended to protect a user's shoulder, a portion of an inflatable element intended for protecting a user's back of and/or a portion of inflatable element intended to protect a user's chest.

9. Garment including a protective device (1, 100) according to any one of the preceding claims from 1 to 8.

10. Method for performing an impact test on an inflatable element (2, 102) of a wearable protective device (1, 100) for a user's personal protection, wherein the test is performed by means of a striking hitting body or hammer, the method provides for:
- providing an inflatable element (2, 102) in which an inner chamber (3, 104) is defined, the inflatable element including a plurality of tie elements (5, 105) distributed in the inner chamber (3, 104) and having opposite ends connected with or joined to surface portions of the inflatable element, wherein the inflatable element includes a protective operating region and a boundary or peripheral zone (32, 132) interposed between a portion of the protective operating region (30, 130) and a free edge zone (20, 21) of the inflatable element (2, 102), and wherein in an active inflated condition said boundary or peripheral zone (32, 132) has a height or thickness greater than the height or thickness of the protective operating region (30, 130) and **characterised in that** said boundary or peripheral zone (32, 132) surrounds at least 50% of the protective operating region (30, 130), and **in that** said method further provides for:
- inflating the inflatable element (2, 102);
- positioning the inflatable element (2, 102) on an anvil so that a superficial portion or face of the inflatable element (2, 102) is laid on the anvil;
- hitting the other surface portion of the inflatable element with the hammer on the protective operating region (30, 130) of the inflatable element (2, 102) as well as on the boundary or peripheral zone (32,132).

11. Method according to claim 10, wherein during the impact test, the inflatable element (2, 102) is moved so that an edge of the inflatable element is brought closer to the anvil and the hammer.

12. Method according to claim 10 or 11, wherein the protective operating region (30, 130) is an area intended for establishing certification of protection by means of the impact test.

13. Method according to any one of the preceding claims 10 to 12, wherein said adjacent free edge zone (20, 21) of the inflatable element (2, 102) is an area not intended for establishing certification of protection.

14. Method according to any one of the preceding claims 10 to 13, wherein the boundary or peripheral zone (32, 132) surrounds at least from 50% to 80% of the protective operating region (30, 130).

15. Method according to any one of the preceding claims 10 to 14, wherein the boundary or peripheral zone (32, 132) completely surrounds the protective operating region (30, 130).

## Patentansprüche

1. Tragbare Schutzvorrichtung (1, 100) zum persönlichen Schutz eines Benutzers, wobei die Schutzvorrichtung ein aufblasbares Element (2, 102) aufweist, in dem eine Innenkammer (3, 104) gebildet ist, wobei das aufblasbare Element eine Vielzahl von Verbindungselementen (5, 105) aufweist, die in der Innenkammer (3, 104) verteilt sind und deren entgegengesetzte Enden an Flächenabschnitte des aufblasbaren Elements angeschlossen bzw. mit diesen verbunden sind, wobei das aufblasbare Element (2, 102) dazu geeignet ist, einen aktiven aufgeblasenen Zustand und einen entleerten Ruhezustand anzunehmen;
wobei die Schutzvorrichtung einen Schutzfunktionsbereich (30, 130) zum Schützen eines entsprechenden Teilbereichs eines Körpers des Benutzers aufweist, wobei das aufblasbare Element eine Begrenzungs- oder Umfangszone (32, 132) aufweist, die sich zwischen zumindest einem Teilbereich des Schutzfunktionsbereichs (30, 130) und einer angrenzenden freien Randzone (20, 21) des aufblasbaren Elements (2, 102) befindet;
und wobei die Begrenzungs- oder Umfangszone (32, 132), wenn das aufblasbare Element im aktiven aufgeblasenen Zustand ist, eine Höhe oder Dicke hat, die größer als die Höhe oder Dicke des Schutzfunktionsbereichs (30, 130) ist;
und **dadurch gekennzeichnet, dass**
die Begrenzungs- oder Umfangszone (32, 132) mindestens 50% des Schutzfunktionsbereichs (30, 130) umgibt.

2. Tragbare Schutzvorrichtung (1, 100) nach Anspruch 1, wobei ein Schutzfunktionsbereich (30, 130) ein Bereich ist, der für die Erlangung eines Schutzzertifikats vorgesehen ist.

3. Tragbare Schutzvorrichtung (1, 100) nach Anspruch 1 oder 2, wobei die angrenzende freie Randzone (20, 21) des aufblasbaren Elements (2, 102) ein Bereich ist, der nicht für die Erlangung eines Schutzzertifikats vorgesehen ist.

4. Tragbare Schutzvorrichtung (1, 100) nach einem der vorhergehenden Ansprüche, wobei die Länge der Verbindungselemente (5, 105) mit der Höhe der Begrenzungs- oder Umfangszone (32, 132) oder mit der Höhe des Schutzfunktionsbereichs (30, 130) korreliert.

5. Tragbare Schutzvorrichtung (1, 100) nach Anspruch 4, wobei die Verbindungselemente (5, 105) in der Begrenzungszone oder Umfangszone (32, 132) eine größere Länge als die Verbindungselemente (5, 105) des Schutzfunktionsbereichs (30, 130) haben.

6. Tragbare Schutzvorrichtung (1, 100) nach einem der vorhergehenden Ansprüche, wobei die Begrenzungs- oder Umfangszone (32, 132) mindestens 50% bis zu 80% des Schutzfunktionsbereichs (30) umgibt.

7. Tragbare Schutzvorrichtung (1, 100) nach einem der vorhergehenden Ansprüche, wobei die Begrenzungs- oder Umfangszone (32, 132) den Schutzfunktionsbereich (30) vollständig umgibt.

8. Tragbare Schutzvorrichtung (1, 100) nach einem der vorhergehenden Ansprüche, wobei der Schutzfunktionsbereich (30) ein Teilbereich eines aufblasbaren Elements, das zum Schutz der Schulter eines Benutzers gedacht ist, ein Teilbereich eines aufblasbaren Elements, das zum Schutz des Rückens eines Benutzers gedacht ist, und/oder ein Teilbereich eines aufblasbaren Elements ist, das zum Schutz des Brustkorbs eines Benutzers gedacht ist.

9. Kleidungsstück mit einer Schutzvorrichtung (1, 100) nach einem der vorhergehenden Ansprüche 1 bis 8.

10. Verfahren zum Durchführen eines Aufpralltests an einem aufblasbaren Element (2, 102) einer tragbaren Schutzvorrichtung (1, 100) zum persönlichen Schutz eines Benutzers, wobei der Test mittels eines aufprallenden Schlagkörpers oder Hammers durchgeführt wird, wobei das Verfahren Folgendes vorsieht:
- Bereitstellen eines aufblasbaren Elements (2, 102), in dem eine Innenkammer (3, 104) gebildet ist, wobei das aufblasbare Element eine Vielzahl von Verbindungselementen (5, 105) aufweist, die in der Innenkammer (3, 104) verteilt sind und deren entgegengesetzte Enden an Flächenabschnitte des aufblasbaren Elements angeschlossen bzw. mit diesen verbunden sind, wobei das aufblasbare Element einen Schutzfunktionsbereich und eine Begrenzungs- oder Umfangszone (32, 132) aufweist, die sich zwischen einem Teilbereich des Schutzfunktionsbereichs (30, 130) und einer freien Randzone (20, 21) des aufblasbaren Elements (2, 102) befindet, und wobei in einem aktiven aufgeblasenen Zustand die Begrenzungs- oder Umfangszone (32, 132) eine Höhe oder Dicke hat, die größer als die Höhe oder Dicke des Schutzfunktionsbereichs (30, 130) ist, und **dadurch gekennzeichnet, dass**
die Begrenzungs- oder Umfangszone (32, 132) mindestens 50% des Schutzfunktionsbereichs (30, 130) umgibt und das Verfahren darüber hinaus Folgendes vorsieht:
- Aufblasen des aufblasbaren Elements (2, 102);
- Positionieren des aufblasbaren Elements (2, 102) auf einem Amboss, so dass ein oberflächlicher Teilbereich oder eine oberflächliche Fläche des aufblasbaren Elements (2, 102) auf dem Amboss aufliegt;
- mit dem Hammer auf den anderen Flächenabschnitt des aufblasbaren Elements zu schlagen, und zwar am Schutzfunktionsbereich (30, 130) des aufblasbaren Elements (2, 102) sowie an der Begrenzungs- oder Umfangszone (32, 132).

11. Verfahren nach Anspruch 10, wobei während des Aufpralltests das aufblasbare Element (2, 102) bewegt wird, so dass ein Rand des aufblasbaren Elements näher an den Amboss und den Hammer herangeführt wird.

12. Verfahren nach Anspruch 10 oder 11, wobei der Schutzfunktionsbereich (30, 130) ein Bereich ist, der mittels des Aufpralltests für die Erlangung eines Schutzzertifikats vorgesehen ist.

13. Verfahren nach einem der vorhergehenden Ansprüche 10 bis 12, wobei die angrenzende freie Randzone (20, 21) des aufblasbaren Elements (2, 102) ein Bereich ist, der nicht für die Erlangung eines Schutzzertifikats vorgesehen ist.

14. Verfahren nach einem der vorhergehenden Ansprüche 10 bis 13, wobei die Begrenzungs- oder Umfangszone (32, 132) mindestens 50% bis zu 80% des Schutzfunktionsbereichs (30, 130) umgibt.

15. Verfahren nach einem der vorhergehenden Ansprüche 10 bis 14, wobei die Begrenzungs- oder Umfangszone (32, 132) den Schutzfunktionsbereich (30, 130) vollständig umgibt.

## Revendications

1. Dispositif de protection pouvant être porté (1, 100) pour la protection personnelle d'un utilisateur, ledit dispositif de protection comprenant un élément gonflable (2, 102) dans lequel est définie une chambre interne (3, 104), l'élément gonflable comprenant une pluralité d'éléments d'attache (5, 105) répartis dans la chambre interne (3, 104) et ayant des extrémités opposées raccordées avec ou assemblées aux parties de surface de l'élément gonflable, dans lequel ledit élément gonflable (2, 102) est approprié pour adopter une condition gonflée active et une condition de repos dégonflée ;
ledit dispositif de protection comprenant une région opérationnelle de protection (30, 130) pour protéger une partie correspondante du corps d'un utilisateur, dans lequel ledit élément gonflable comprend une limite ou zone périphérique (32, 132) intercalée entre au moins une partie de la région opérationnelle de protection (30, 130) et une zone de bord libre (20, 21) adjacente de l'élément gonflable (2, 102) ;
et dans lequel ladite limite ou zone périphérique (32, 132), lorsque l'élément gonflable est dans ladite condition gonflée active, a une hauteur ou épaisseur supérieure à la hauteur ou à l'épaisseur de la région opérationnelle de protection (30, 130) ;
et **caractérisé en ce que** :
ladite limite ou zone périphérique (32, 132) entoure au moins 50 % de la région opérationnelle de protection (30, 130).

2. Dispositif de protection pouvant être porté (1, 100) selon la revendication 1, dans lequel une région opérationnelle de protection (30, 130) est une zone destinée à établir la certification de protection.

3. Dispositif de protection pouvant être porté (1, 100) selon la revendication 1 ou 2, dans lequel ladite zone de bord libre (20, 21) adjacente de l'élément gonflable (2, 102) est une zone non destinée à établir la certification de protection.

4. Dispositif de protection pouvant être porté (1, 100) selon l'une quelconque des revendications précédentes, dans lequel la longueur des éléments d'attache (5, 105) est corrélée à la hauteur de limite ou de zone périphérique (32, 132) ou à la hauteur de la région opérationnelle de protection (30, 130).

5. Dispositif de protection pouvant être porté (1, 100) selon la revendication 4, dans lequel les éléments d'attache (5, 105) dans la zone de limite ou la zone périphérique (32, 132) ont une longueur supérieure que les éléments d'attache (5, 105) de la zone opérationnelle de protection (30, 130).

6. Dispositif de protection pouvant être porté (1, 100) selon l'une quelconque des revendications précédentes, dans lequel la limite ou zone périphérique (32, 132) entoure au moins de 50 % à 80 % de la région opérationnelle de protection (30).

7. Dispositif de protection pouvant être porté (1, 100) selon l'une quelconque des revendications précédentes, dans lequel la limite ou zone périphérique (32, 132) entoure complètement la région opérationnelle de protection (30).

8. Dispositif de protection pouvant être porté (1, 100) selon l'une quelconque des revendications précédentes, dans lequel la région opérationnelle de protection (30) est une partie d'un élément gonflable prévu pour protéger les épaules d'un utilisateur, une partie d'un élément gonflable prévue pour protéger le dos d'un utilisateur et/ou une partie d'élément gonflable pour protéger la poitrine d'un utilisateur.

9. Vêtement comprenant un dispositif de protection (1, 100) selon l'une quelconque des revendications 1 à 8.

10. Procédé pour réaliser un test d'impact sur un élément gonflable (2, 102) d'un dispositif de protection pouvant être porté (1, 100) pour la protection personnelle d'un utilisateur, dans lequel le test est réalisé au moyen d'un corps de frappe ou d'un marteau, le procédé comprenant les étapes suivantes :
prévoir un élément gonflable (2, 102) dans lequel est définie une chambre interne (3, 104), l'élément gonflable comprenant une pluralité d'éléments d'attache (5, 105) répartis dans la chambre interne (3, 104) et ayant des extrémités opposées raccordées avec ou assemblées aux parties de surface de l'élément gonflable, dans lequel l'élément gonflable comprend une région opérationnelle de protection et une limite ou zone périphérique (32, 132) intercalée entre une partie de la région opérationnelle de protection (30, 130) et une zone de bord libre (20, 21) de l'élément gonflable (2, 102) et dans lequel dans une condition gonflée active, ladite limite ou zone périphérique (32, 132) a une hauteur ou épaisseur supérieure à la hauteur ou à l'épaisseur de la région opérationnelle de protection (30, 130) et **caractérisé en ce que** :
ladite limite ou zone périphérique (32, 132) entoure au moins 50 % de la région opérationnelle de protection (30, 130) et **en ce que** ledit procédé comprend en outre les étapes suivantes :
gonfler l'élément gonflable (2, 102) ;
positionner l'élément gonflable (2, 102) sur une enclume de sorte qu'une partie superficielle ou face de l'élément gonflable (2, 102) est posée sur l'enclume ;
frapper l'autre partie de surface de l'élément gonflable avec le marteau sur la région opérationnelle de protection (30, 130) de l'élément gonflable (2, 102) ainsi que sur la limite ou zone périphérique (32, 132).

11. Procédé selon la revendication 10, dans lequel pendant le test d'impact, l'élément gonflable (2, 102) est déplacé de sorte qu'un bord de l'élément gonflable est rapproché de l'enclume et du marteau.

12. Procédé selon la revendication 10 ou 11, dans lequel la région opérationnelle de protection (30, 130) est une zone destinée à établir la certification de protection au moyen du test d'impact.

13. Procédé selon l'une quelconque des revendications 10 à 12, dans lequel ladite zone de bord libre (20, 21) adjacente de l'élément gonflable (2, 102) est une zone non destinée à établir la certification de protection.

14. Procédé selon l'une quelconque des revendications 10 à 13, dans lequel la limite ou zone périphérique (32, 132) entoure au moins de 50 % à 80 % de la région opérationnelle de protection (30, 130).

15. Procédé selon l'une quelconque des revendications 10 à 14, dans lequel la limite ou zone périphérique (32, 132) entoure complètement la région opérationnelle de protection (30, 130).
